# FASCICULE DE BREVET EUROPEEN

(11) **EP 3 966 074 B1**
(45) Date de publication et mention de la délivrance du brevet: **04.10.2023**
(21) Numéro de dépôt: 20735229.5
(22) Date de dépôt: 11.05.2020
(51) Int. Cl.: B60Q 1/04, B60Q 1/26

(54) **DISPOSITIF DE FIXATION D'UNE JUPE D'HABILLAGE SUR UN BOÎTIER DE FEUX ARRIÈRE POUR VÉHICULES AUTOMOBILES ET PROCÉDÉ D'ASSEMBLAGE AU MOYEN DUDIT DISPOSITIF**
VORRICHTUNG ZUM BEFESTIGEN EINER ZIERKAPPE AN EINEM HINTEREN LICHTGEHÄUSE FÜR KRAFTFAHRZEUGE UND VERFAHREN ZUR MONTAGE MITTELS DIESER VORRICHTUNG
DEVICE FOR ATTACHING A TRIM SKIRT TO A REAR LIGHT HOUSING FOR MOTOR VEHICLES, AND METHOD FOR ASSEMBLY BY MEANS OF SAID DEVICE

(30) Priorité: 10.05.2019 FR 1904885
(43) Date de publication de la demande: 16.03.2022
(73) Titulaire: PSA Automobiles SA, 78300 Poissy (FR)
(72) Inventeur: PERON, Rodolphe, 95220 Herblay (FR); SIMANDRE, Stephane, 28130 Chartainvillers (FR)
(86) Numéro de dépôt international: PCT/FR2020/000166
(87) Numéro de publication internationale: WO 2020/229740

(56) Documents cités:
- FR-A1- 2 918 632
- FR-A1- 2 946 609

## Description

L'invention s'applique au domaine de la signalisation des véhicules automobiles et, en particulier, à l'environnement des feux arrière.

Plus précisément, l'invention concerne un dispositif de fixation d'une jupe d'habillage sur un boîtier de feux arrière pour véhicules automobiles ainsi qu'un procédé d'assemblage mettant en oeuvre ledit dispositif.

De manière traditionnelle, les véhicules automobiles sont équipés, sur leur face arrière, de modules de feux de signalisation (feux stop, feux de recul, ...) intégrés dans un boîtier pourvu d'une jupe d'habillage.

Cette jupe est destinée, d'une part, à être montée en porte à faux sur le boîtier pour habiller sa face latérale et, d'autre part, à masquer la structure du véhicule à son interface avec le boîtier.

Cependant, dans la zone de fixation du boîtier, la structure du véhicule n'est pas plane et présente, au contraire, un profil très irrégulier qui n'offre à la jupe d'habillage, ni une bonne surface de support, ni des moyens de retenue fiables et amovibles. Par conséquent, la qualité de la finition n'est pas satisfaisante.

En outre, la finition est d'autant plus problématique que la jupe est généralement réalisée avec un matériau souple (tel qu'un polymère du type Poly(méthacrylate de méthyle) dit PMMA) et se trouve donc souvent déformée en cas de choc ou d'appui accidentel.

Dans ce contexte, l'invention vise à apporter une solution technique permettant de procurer un mode de montage mécaniquement résistant et sans élément de fixation rapporté, à la jupe souple de finition d'un boîtier de feux de signalisation arrière sur une zone de profil irrégulier de son interface avec la carrosserie d'un véhicule.

Le document FR 2 918 632 A1 divulgue un dispositif de fixation selon le préambule de la revendication 1 de l'invention.

Ce but est atteint au moyen d'un dispositif de fixation d'une jupe d'habillage sur un boîtier de feux arrière de véhicule automobile, comprenant, sur la face interne de la jupe, au moins deux séries d'organes comprenant chacune au moins un organe de centrage associé à au moins un organe d'appui et à au moins un organe de liaison coopérant lors de l'assemblage avec le boîtier, respectivement, avec au moins un organe de calage, au moins un organe de réception élastique et au moins un organe de retenue, portés par la face latérale dudit boîtier.

Selon l'invention, l'organe de centrage de la jupe comprend un pion de section en croix destinés à pénétrer, lors de l'assemblage, dans un orifice de calage ménagé en regard dans le boîtier.

Selon l'invention, l'organe d'appui de la jupe comprend un ergot destiné à venir en contact, lors de l'assemblage, contre une languette flexible de réception portée par le boîtier.

Selon l'invention, l'orifice de calage est ménagé à la base de la languette flexible de réception.

Selon un mode réalisation de l'invention, l'organe de liaison de la jupe comprend un crochet destiné à venir s'engager dans une cavité de retenue réalisée sur ledit boîtier.

Selon une variante avantageuse, la cavité de retenue est située sur le pourtour du boîtier.

Selon une variante spécifique de l'invention, le dispositif comprend trois séries d'organes sur la jupe et sur le boîtier.

De préférence, les organes de centrage et les organes d'appui de ces séries sont alors groupés deux à deux sur la face interne de la jupe.

Un autre objet de l'invention est un procédé d'assemblage d'une jupe d'habillage sur un boîtier de feux arrière à l'interface avec la structure d'un véhicule automobile, ladite jupe et ledit boîtier étant pourvus d'un dispositif de fixation tel que défini ci-dessus, caractérisé en ce qu'on introduit les organes de centrage de la jupe dans les organes de calage en forçant conjointement ses organes d'appui contre les organes de réception du boîtier pour les déformer élastiquement ce qui amène les organes de liaison de la jupe en vis à vis des organes de retenue du boîtier puis, en relâchant l'effort, les organes de liaison de la jupe se logent alors automatiquement dans les organes de retenue du boîtier en assurant ainsi la fixation de la jupe sans contact d'appui sur la structure du véhicule.

Encore un autre objet de l'invention est un ensemble de signalisation pour véhicules automobiles comprenant un boîtier de feux arrière, une jupe d'habillage et un dispositif de fixation de ladite jupe sur le boîtier présentant les caractéristiques définies ci-dessus.

Le dispositif de l'invention assure une fixation rapide, précise et réversible d'une jupe d'habillage sur un boîtier de feux arrière et permet ainsi de récupérer la jupe en cas de changement de feux.

En effet, le dispositif de fixation de l'invention n'utilise aucun élément rapporté (ni vis, ni colle etc..) et permet donc, en cas de remplacement du module de feu arrière, de remonter la même jupe sur le boîtier du nouveau feu ou sur un autre boîtier identique au précédent ou pourvu des mêmes organes fonctionnels.

En outre, grâce au dispositif de l'invention, la zone d'appui de la jupe est déportée sur le boîtier et non sur la structure du véhicule ce qui, compte tenu du profil irrégulier de l'interface, permet d'éviter les risques de déformation et de préserver l'intégrité de la jupe en cas d'appui accidentel ou fortuit.

En outre les propriétés élastiques de l'appui de la jupe sur le boîtier permettent à la fois un verrouillage automatique après relâchement en fin d'assemblage et un amortissement ultérieur des chocs.

Par ailleurs, la maintenance du module de signalisation arrière est grandement facilitée puisque la dépose préalable de la jupe peut être effectuée manuellement et sans outillage spécifique.

Par conséquent, le dispositif de fixation de l'invention offre un gain économique significatif, en particulier, pour les services après-vente.

D'autres caractéristiques et avantages de l'invention ressortiront à la lecture de la description qui va suivre, en référence aux figures annexées et détaillées ci-après.
[Fig. 1] est une vue d'ensemble en perspective éclatée d'un boîtier de feux arrière avec sa jupe d'habillage et son interface avec la structure d'un véhicule automobile.
[Fig. 2A] est une vue en perspective de la face interne d'une jupe d'habillage pourvue d'une première partie des éléments d'un mode de réalisation du dispositif de fixation de l'invention.
[Fig. 2B] est une vue en perspective de la face interne d'un boîtier de feux arrière pourvue d'une autre partie des éléments du mode de réalisation de la figure 2A.
[Fig. 3A] est une vue partielle et de face du mode de réalisation du dispositif de fixation des figures 2A et 2B, en position d'assemblage de l'ensemble de signalisation comprenant la jupe et le boîtier.
[Fig. 3B] est une vue de détail d'un organe d'appui de la jupe d'habillage.
[Fig. 4] est une vue partielle en coupe illustrant la coopération entre, d'une part, les organes de centrage de la jupe et les organes de calage du boîtier et, d'autre part, les organes d'appui de de la jupe et les organes de réception du boîtier, selon un mode de réalisation du dispositif de fixation de l'invention après assemblage.
[Fig. 5A] est une vue partielle en perspective illustrant la coopération entre les organes de liaison de la jupe et les organes de retenue du boîtier selon un mode de réalisation du dispositif de fixation de l'invention avant assemblage.
[Fig. 5B] est une vue partielle en coupe illustrant la coopération entre les organes de liaison de la jupe et les organes de retenue du boîtier selon le mode de réalisation du dispositif de fixation de la figure 5A, après assemblage.

Pour plus de clarté, les éléments identiques ou similaires sont repérés par des signes de référence identiques sur l'ensemble des figures.

Naturellement, les modes de mise en oeuvre du procédé de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

L'invention concerne le domaine de la signalisation des véhicules automobiles et, plus particulièrement, la fixation d'une jupe d'habillage sur un boîtier de feu arrière de véhicule automobile.

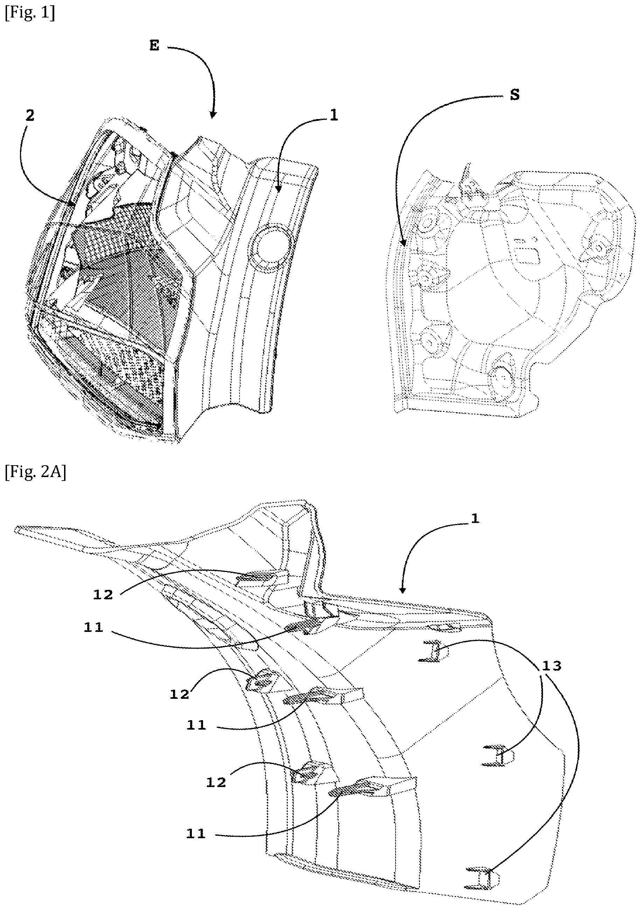

La figure 1 représente un ensemble de signalisation comprenant un boîtier 2 renfermant un module de signalisation arrière et une jupe d'habillage 1 de finition destinée, d'une part, à être montée en porte à faux sur la face latérale du boîtier 2 et, d'autre part, à masquer la structure S du véhicule en couvrant son interface avec le boîtier.

Comme illustré par la figure 1, la structure S présente généralement une surface tournée vers l'extérieur dont le profil est irrégulier avec des protubérances et des reliefs multiples et variés.

Or, la jupe 1 est réalisée avec une matière souple (par exemple, un polymère thermoplastique) et est, par conséquent facilement déformable.

Le dispositif de l'invention vise à assurer la fixation de la jupe 1 sur le boîtier 2 sans établir un quelconque contact d'appui sur la structure S de façon à éviter ainsi toute déformation ultérieure intempestive de la jupe 2 de nature à altérer son intégrité et à modifier sa forme de façon rémanente.

A cet effet, le dispositif de fixation de l'invention comprend, sur la face interne de la jupe 2, au moins deux séries d'organes participant à la fixation sur le boîtier 2. Chaque série d'organes comprend au moins un organe de centrage associé à au moins un organe d'appui et à au moins un organe de liaison.

Ces organes fonctionnels sont aptes et destinés à coopérer, lors de l'assemblage avec le boîtier 2, respectivement, avec un au moins un organe de calage, au moins un organe de réception élastique et au moins un organe de retenue complémentaires, tous portés par la face latérale de ce boîtier.

De préférence, les organes de centrage et les organes d'appui sont groupés deux à deux sur la face interne de la jupe 1, comme illustré par la figure 2A.

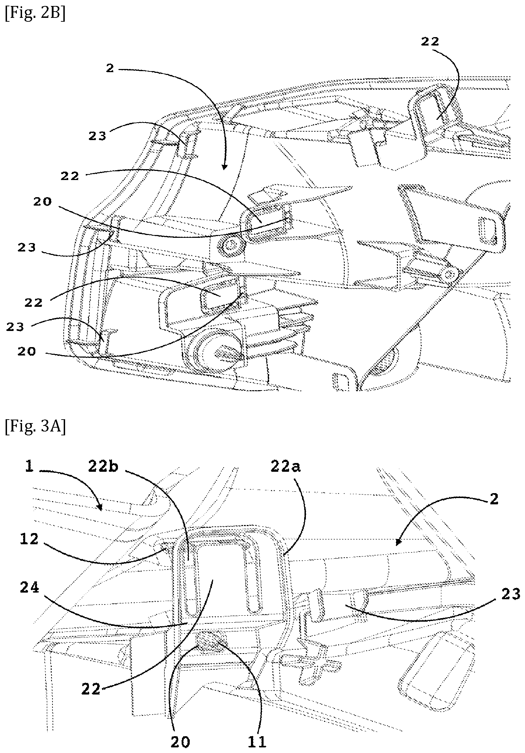

Dans le mode de réalisation représenté ici sur les figures 2A et 2B annexées, la face interne de la jupe 1 et le boîtier 2 comporte chacun trois séries d'organes fonctionnels complémentaires qui vont être décrits en détail ci-après.

Les organes d'appui de la jupe 1 comprennent un ergot 12 destiné à venir en contact, lors de l'assemblage, contre une languette flexible 22 de réception portée par le boîtier 2, comme illustré en détail par la figure 3A.

En effet, ces ergots 12 ne peuvent pas venir en appui sur la structure S du véhicule car celle-ci est située à une distance trop importante de la jupe 1 et, en tous cas, du fait que la structure S n'est pas plane, elle ne pourrait pas garantir un appui longitudinal stable. C'est la raison pour laquelle l'appui des ergots 12 se fait sur les languettes élastiques 22 issues du boitier 2.

Les languettes flexibles 22 sont portées par des pattes en saillie 24 pourvues d'un rebord périphérique saillant 22a qui permet de les rigidifier et de garantir la planéité de l'appui des ergots 12 et le maintien stable de la jupe 1 sur le boîtier 2. Les languettes 22 sont délimitées sur ces pattes par une fente 22b, comme illustré par la figure 3A.

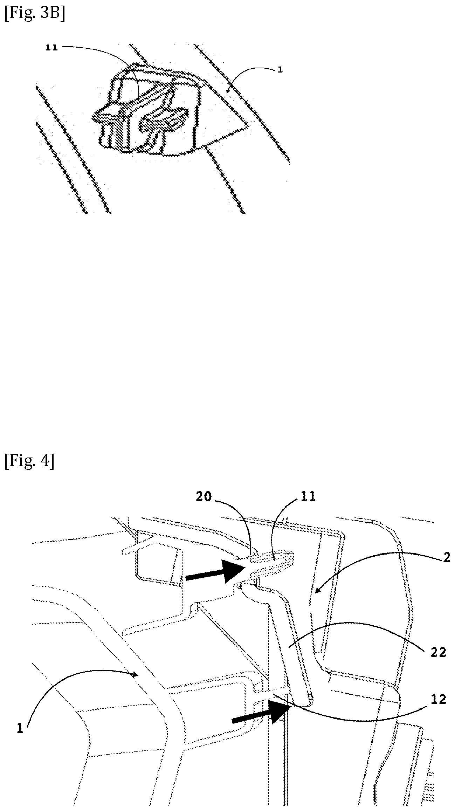

Les organes de centrage de la jupe 1 comprennent, quant à eux, un pion 11 de section en croix (figure 3B) destiné à pénétrer, lors de l'assemblage, dans un orifice de calage 20 ménagé en regard dans le boîtier 2. Cet orifice de calage 20 est ménagé à la base de la languette flexible 22 de réception, comme illustré encore en détail par la figure 3A. Grâce à la coopération entre les pions 11 et les orifices 20, le positionnement latéral de la jupe est garanti.

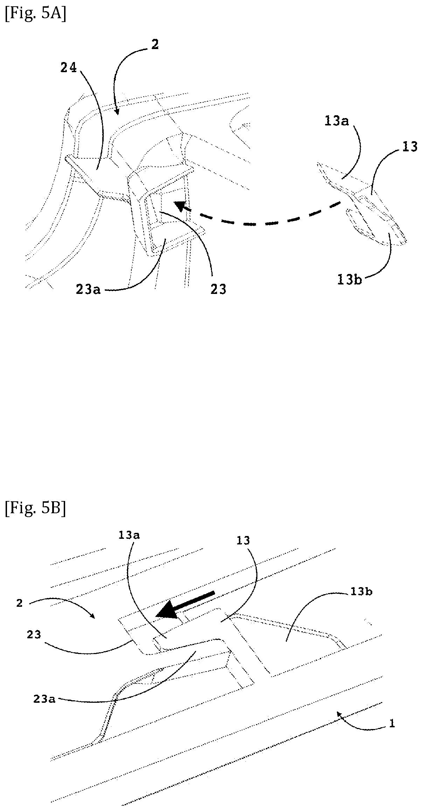

Les organes de liaison de la jupe 1 comprennent un crochet 13 destiné à venir s'engager dans une cavité 23 de retenue réalisée sur le pourtour du boîtier 2, comme illustré par les figures 5A et 5B.

Dans la variante de réalisation illustrée ici par les figures 5A et 5B, la cavité 23 est délimitée, d'une part, par la paroi du boîtier et, d'autre part, par des flancs latéraux 23a et est raccordée au pourtour du boîtier 2 par une nervure de renfort 24. Le crochet 13 est ici réalisé sous forme d'une pince à deux branches latérales 13a flexibles dont l'écartement est sensiblement égal ou légèrement inférieur à la largeur de la cavité 23. Les deux branches latérales 13a se prolongent vers l'arrière par une ailette 13b de rigidification.

Le procédé d'assemblage de la jupe d'habillage 1 sur le boîtier 2 à l'interface avec la structure S d'un véhicule va être maintenant décrit en détail.

On introduit tout d'abord les pions 11 de centrage de la jupe 1 dans les orifices de calage 20 du boîtier 2 en forçant simultanément, par un effort conjoint, les ergots d'appui 12 contre les languettes flexibles 22 de réception pour les déformer élastiquement, comme illustré par les flèches sur la figure 4. Cette action a pour effet d'amener les crochets de liaison 13 de la jupe 1 en vis à vis des cavités de retenue 23 situées à la périphérie du boîtier 2.

En relâchant ensuite l'effort, les languettes flexible 22 reviennent dans leur position initiale et les crochets de liaison 13 de la jupe 1 viennent alors se loger alors dans les cavités 23 du boîtier 2 en assurant ainsi la fixation et le verrouillage de la jupe 1 sur le boîtier 2, comme illustré par la figure 5B. Dans cette position finale, la jupe 1 n'a aucun contact avec la structure S du véhicule.

Le cas échéant, une opération ultérieure d'enfoncement des ergots d'appui 12 contre les languettes 22 permettrait de libérer l'emprise des crochets 13 dans les cavités 23 et de séparer la jupe 1 du boîtier 2, par exemple, dans un objectif de maintenance.

## Revendications

1. Dispositif de fixation d'une jupe (1) d'habillage sur un boîtier (2) de feux arrière de véhicule automobile, comprenant, sur la face interne de la jupe (1), au moins deux séries d'organes comprenant chacune au moins un organe de centrage associé à au moins un organe d'appui et à au moins un organe de liaison coopérant lors de l'assemblage avec le boîtier (2), respectivement, avec au moins un organe de calage, au moins un organe de réception élastique et au moins un organe de retenue, portés par la face latérale dudit boîtier (2) ;
ledit organe d'appui de la jupe (1) comprenant un ergot (12) destiné à venir en contact, lors de l'assemblage, contre une languette flexible (22) de réception portée par ledit boîtier (2) ;
**caractérisé en ce que**
ledit organe de centrage de la jupe (1) comprend un pion (11) de section en croix destiné à pénétrer, lors de l'assemblage, dans un orifice (20) de calage ménagé en regard dans ledit boîtier (2) ;
ledit orifice de calage (20) est ménagé à la base de ladite languette flexible (22) de réception.

2. Dispositif de fixation selon la revendication précédente, **caractérisé en ce que** ledit organe de liaison de la jupe comprend un crochet (13) destiné à venir s'engager dans une cavité (23) de retenue réalisée sur ledit boîtier (2).

3. Dispositif de fixation selon la revendication précédente, **caractérisé en ce que** ladite cavité (23) de retenue est située sur le pourtour du boîtier (2).

4. Dispositif de fixation selon l'une des revendications précédentes, **caractérisé en ce qu'**il comprend trois séries d'organes sur la jupe (1) et le boîtier (2).

5. Dispositif de fixation selon la revendication précédente, **caractérisé en ce que** lesdits organes de centrage et lesdits organes d'appui sont groupés deux à deux sur la face interne de la jupe (1).

6. Procédé d'assemblage d'une jupe (1) d'habillage sur un boîtier (2) de feux arrière à l'interface avec la structure (S) d'un véhicule automobile, ladite jupe et ledit boîtier étant pourvus d'un dispositif de fixation selon l'une des revendications précédentes, **caractérisé en ce qu'**on introduit les organes de centrage de la jupe (1) dans les organes de calage du boîtier (2) en forçant conjointement ses organes d'appui contre les organes de réception dudit boîtier pour les déformer élastiquement ce qui amène les organes de liaison de la jupe (1) en vis à vis des organes de retenue du boîtier (2) puis, en relâchant l'effort, les organes de liaison de la jupe se logent alors automatiquement dans les organes de retenue du boîtier en assurant ainsi la fixation de la jupe sans contact d'appui sur la structure (S) du véhicule.

7. Ensemble de signalisation pour véhicules automobiles comprenant un boîtier (2) de feux arrière, une jupe (1) d'habillage et un dispositif de fixation de ladite jupe sur le boîtier selon l'une des revendications 1 à 5.

## Patentansprüche

1. Vorrichtung zur Befestigung einer Zierschürze (1) an einem Gehäuse (2) von Rückleuchten für Kraftfahrzeuge, umfassend auf der Innenseite der Zierschürze (1) mindestens zwei Reihen von Elementen, denen jeweils mindestens ein Zentrierelement zugeordnet ist mit mindestens einem Stützelement und mit mindestens einem Verbindungselement, die bei der Montage mit dem Gehäuse (2) zusammenwirken, bzw. mit mindestens einem Keilelement, mindestens einer elastischen Aufnahme des Elements und mindestens einer Halterung, die von der Seitenfläche des Gehäuses (2) getragen werden das Gehäuse (2); wobei das Stützelement für die Schürze (1) eine Nase (12) aufweist, die dazu bestimmt ist, mit der Schürze (1) in Kontakt zu kommen
der Anordnung gegen eine flexible Zunge (22) zur Aufnahme, die vom Gehäuse (2) getragen wird, **dadurch gekennzeichnet, dass**
das Zentrierelement der Schürze (1) einen Stift (11) mit einem Querschnitt umfasst, der dazu bestimmt ist, beim Zusammenbau in eine Keilöffnung (20) einzudringen, die gegenüberliegend im Gehäuse (2) vorgesehen ist;
die Keilöffnung (20) zur Aufnahme an der Basis der flexiblen Lasche (22) ausgebildet ist.

2. Befestigungsvorrichtung nach dem vorhergehenden Anspruch, **dadurch gekennzeichnet, dass** das Schürzenverbindungselement einen Haken (13) umfasst, der dazu bestimmt ist, in eine am Gehäuse (2) vorgesehene Halteaussparung (23) einzugreifen.

3. Befestigungsvorrichtung nach dem vorhergehenden Anspruch, **dadurch gekennzeichnet, dass** sich der Haltehohlraum (23) am Umfang des Gehäuses (2) befindet.

4. Befestigungsvorrichtung nach einem der vorhergehenden Ansprüche, **dadurch gekennzeichnet, dass** sie drei Elementsätze an der Schürze (1) und dem Gehäuse (2) umfasst.

5. Befestigungsvorrichtung nach dem vorhergehenden Anspruch, **dadurch gekennzeichnet, dass** die Zentrierelemente und die Stützelemente paarweise auf der Innenseite der Schürze (1) gruppiert sind.

6. Verfahren zur Montage einer Zierschürze (1) an einem Rückleuchtengehäuse (2) an der Schnittstelle zur Struktur (S) eines Kraftfahrzeugs, wobei die Schürze und das Gehäuse mit einer Befestigungsvorrichtung nach einem der vorhergehenden Ansprüche versehen sind Ansprüche, **dadurch gekennzeichnet, dass** die Zentrierelemente der Schürze (1) in die Keilelemente des Gehäuses (2) eingeführt werden, indem ihre Lagerelemente gemeinsam gegen die das Gehäuse aufnehmenden Elemente gedrückt werden, um sie elastisch zu verformen, wodurch die Verbindungselemente des Gehäuses (2) zusammengebracht werden Die Schürze (1) gegenüber den Halteelementen des Gehäuses (2) positionieren. Durch Nachlassen der Kraft greifen die Verbindungselemente der Schürze dann automatisch in die Halteelemente des Gehäuses ein und gewährleisten so die Befestigung der Schürze ohne Kontakt zum Gehäuse Struktur (S) des Fahrzeugs.

7. Signalanlage für Kraftfahrzeuge bestehend aus einem Rückleuchtengehäuse (2), einer Zierschürze (1) und einer Vorrichtung zur Befestigung dieser Schürze am Gehäuse nach einem der Ansprüche 1 bis 5.

## Claims

1. Device for fixing a trim skirt (1) to a housing (2) of motor vehicle rear lights, comprising, on the internal face of the skirt (1), at least two series of members each comprising at least one centering member associated with at least one support member and with at least one connecting member cooperating during assembly with the housing (2), respectively, with at least one wedging member, at least one member elastic reception and at least one retainer, carried by the side face of said housing (2); said support member for the skirt (1) comprising a lug (12) intended to come into contact, when
of the assembly, against a flexible tongue (22) for receiving carried by the said casing (2);
**characterized in that**
said centering member of the skirt (1) comprises a pin (11) of cross section intended to penetrate, during assembly, into a wedging orifice (20) provided opposite in said casing (2);
said wedging orifice (20) is formed at the base of said flexible tab (22) for receiving.

2. Fastening device according to the preceding claim, **characterized in that** said skirt connecting member comprises a hook (13) intended to engage in a retaining cavity (23) made on said housing (2).

3. Fastening device according to the preceding claim, **characterized in that** said retaining cavity (23) is located on the periphery of the housing (2).

4. Fastening device according to one of the preceding claims, **characterized in that** it comprises three sets of members on the skirt (1) and the housing (2).

5. Fastening device according to the preceding claim, **characterized in that** said centering members and said support members are grouped two by two on the inner face of the skirt (1).

6. Method of assembling a trim skirt (1) on a rear light housing (2) at the interface with the structure (S) of a motor vehicle, said skirt and said housing being provided with a fixing device according to one of the preceding claims, **characterized in that** the centering members of the skirt (1) are introduced into the wedging members of the case (2) by jointly forcing its bearing members against the members receiving said casing to deform them elastically, which brings the connecting members of the skirt (1) opposite the retaining members of the casing (2) then, by releasing the force, the connecting members of the skirt then automatically lodge in the retaining members of the housing, thus ensuring the fixing of the skirt without bearing contact on the structure (S) of the vehicle.

7. Signaling assembly for motor vehicles comprising a rear light housing (2), a trim skirt (1) and a device for fixing said skirt to the housing according to one of claims 1 to 5.
